(19) Europäisches Patentamt
European Patent Office
Office européen des brevets

(11) EP 4 036 328 A1

(12) EUROPEAN PATENT APPLICATION
published in accordance with Art. 153(4) EPC

(43) Date of publication:
03.08.2022 Bulletin 2022/31

(51) International Patent Classification (IPC):
E03C 1/044 (2006.01)    F24D 17/00 (2022.01)

(21) Application number: 20870377.7

(52) Cooperative Patent Classification (CPC):
E03C 1/044; F24D 17/00

(22) Date of filing: 04.06.2020

(86) International application number:
PCT/JP2020/022154

(87) International publication number:
WO 2021/059599 (01.04.2021 Gazette 2021/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.09.2019 JP 2019175482

(71) Applicant: LIXIL Corporation
Koto-ku
Tokyo 136-8535 (JP)

(72) Inventors:
• MIZUNO, Takayuki
Tokyo 136-8535 (JP)
• OZEKI, Kenji
Tokyo 136-8535 (JP)
• KAMATA, Azumi
Tokyo 136-8535 (JP)
• NAGATA, Masaaki
Tokyo 136-8535 (JP)

(74) Representative: Rössler, Matthias
karo IP Patentanwälte
Kahlhöfer Rößler Kreuels PartG mbB
Postfach 32 01 02
40416 Düsseldorf (DE)

(54) **HOT AND COLD WATER MIXER**

(57) Provided is a hot and cold water mixer capable of performing stable temperature control.

A hot and cold water mixer (10) includes a cold water supply pipe (1C), a hot water supply pipe (1H), a mixing pipe (1M), flow rate adjustment valves (4C and 4H), temperature sensors (3C and 3H), flow rate sensors (5C and 5H), a setting unit (70), and a control unit (80). When the control unit (80) determines that either one of the flow rate adjustment valve (4C) in the cold water supply path and the flow rate adjustment valve (4H) in the hot water supply path cannot increase the flow rate, and also determines, by comparing the target flow rate for the one flow rate adjustment valve with the flow rate of water flowing through the one flow rate adjustment valve, that the target flow rate for the one flow rate adjustment valve is higher, the control unit (80) calculates and updates the target flow rate for the other flow rate adjustment valve so that the temperature of the mixed water set by the setting unit (70) can be attained, and controls the other flow rate adjustment valve based on the updated target flow rate for the other flow rate adjustment valve.

Fig. 2

```
              START
   S1    RECEIVE T_M AND Q_M
   S2    RECEIVE T_C, T_H AND Q_C, Q_H
   S3    CALCULATE Q_C1 AND Q_H1
   S4    DETERMINE ADJUSTMENT AMOUNTS OF
         FLOW RATE ADJUSTMENT VALVES 4C AND 4H
   S5    SEND CONTROL SIGNALS TO FLOW RATE
         ADJUSTMENT VALVES 4C AND 4H
```

**Description**

TECHNICAL FIELD

The present disclosure relates to a hot and cold water mixer.

BACKGROUND ART

Patent Literature 1 discloses a hot and cold water mixer. The hot and cold water mixer mixes cold water supplied from a cold water supply source and hot water supplied from a hot water supply source, and discharges mixed water having a predetermined temperature and a predetermined flow rate. In the hot and cold water mixer, when cold water or hot water having a set flow rate is not allowed to flow, a target flow rate is corrected so that a fluctuation in temperature of the mixed water to be discharged can be suppressed.

CITATIONS LIST

PATENT LITERATURE

Patent Literature 1: JP 2015-183986 A

SUMMARY OF INVENTION

TECHNICAL PROBLEMS

In the hot and cold water mixer of Patent Literature 1, when there is a pressure fluctuation such as a pressure of the cold water supply source and a pressure of the hot water supply source being lower than predetermined pressures or the differential pressures being large, correction of the target flow rate may be insufficient and a difference between the temperature of the mixed water and the set temperature may be large.

In view of such circumstances, an object of the present disclosure is to provide a hot and cold water mixer capable of performing stable temperature control even when there is a pressure fluctuation.

SOLUTIONS TO PROBLEMS

A hot and cold water mixer of the present disclosure includes:

a cold water supply path connected to a cold water supply source and through which cold water supplied from the cold water supply source flows;
a hot water supply path connected to a hot water supply source and through which hot water supplied from the hot water supply source flows;
a mixed water path that is connected to the cold water supply path and the hot water supply path and through which mixed water obtained by mixing cold water supplied from the cold water supply path and hot water supplied from the hot water supply path flows;
a cold water-side flow rate adjustment unit that adjusts a flow rate of cold water present in the cold water supply path;
a hot water-side flow rate adjustment unit that adjusts a flow rate of hot water present in the hot water supply path;
a cold water-side information acquisition unit configured to acquire cold water information including a temperature and the flow rate of the cold water present in the cold water supply path;
a hot water-side information acquisition unit configured to acquire hot water information including a temperature and the flow rate of the hot water present in the hot water supply path;
a setting unit configured to set a temperature and a flow rate of mixed water present in the mixed water path; and
a control unit that calculates a target flow rate of cold water flowing through the cold water supply path and a target flow rate of hot water flowing through the hot water supply path based on setting information of the setting unit, the cold water information of the cold water-side information acquisition unit, and the hot water information of the hot water-side information acquisition unit, and controls the cold water-side flow rate adjustment unit and the hot water-side flow rate adjustment unit.

When the control unit determines that at least either one of the cold water-side flow rate adjustment unit and the hot-water side flow rate adjustment unit cannot increase the flow rate, and also determines, by comparing the target flow rate for the one flow rate adjustment unit with the flow rate of water flowing through the one flow rate adjustment unit, that the target flow rate for the one flow rate adjustment unit is higher, the control unit calculates and updates the target flow rate for the other flow rate adjustment unit so that the temperature of the mixed water set by the setting unit can be attained, and controls the other flow rate adjustment unit based on the updated target flow rate for the other flow rate adjustment unit.

BRIEF DESCRIPTION OF DRAWINGS

Fig. 1 is a schematic view illustrating an entire hot and cold water mixer according to an embodiment.
Fig. 2 is a flowchart illustrating a flow of temperature control and flow rate control of the hot and cold water mixer according to the embodiment.
Fig. 3 is a flowchart illustrating a flow of calculation of each target flow rate in Fig. 2.
Fig. 4 is a flowchart illustrating a flow of sending a control signal to each flow rate adjustment valve in Fig. 2.

DESCRIPTION OF EMBODIMENTS

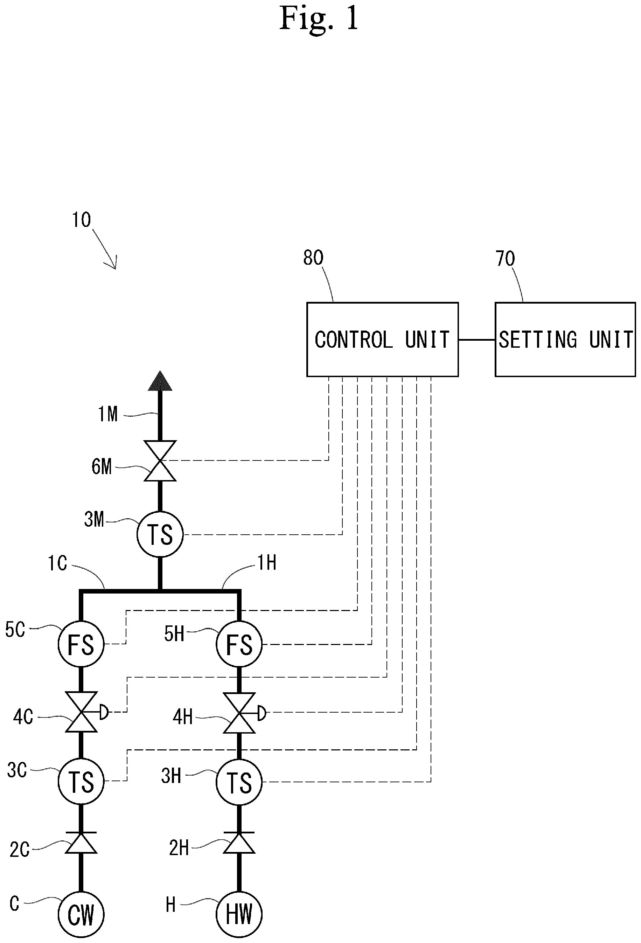

Next, a hot and cold water mixer according to an embodiment will be described with reference to the drawings. A hot and cold water mixer 10 is installed in a kitchen or a bathroom. The hot and cold water mixer 10 supplies mixed water having a predetermined temperature and a predetermined flow rate to a sink or a discharge pipe attached to a washing place. As illustrated in Fig. 1, the hot and cold water mixer 10 includes a cold water supply pipe 1C, a hot water supply pipe 1H, and a mixing pipe 1M.

The cold water supply pipe 1C is connected to a cold water supply source C, and a cold water supply path is formed inside the cold water supply pipe 1C. Cold water having a temperature of, for example, 20°C flows through the cold water supply path. The cold water supply pipe 1C includes a check valve 2C, a temperature sensor 3C, a flow rate adjustment valve 4C, and a flow rate sensor 5C in order from an upstream side to a downstream side.

The hot water supply pipe 1H is connected to a hot water supply source H such as a gas water heater, and a hot water supply path is formed inside the hot water supply pipe 1H. Hot water of, for example, 60°C flows through the hot water supply path. Similarly to the cold water supply pipe 1C described above, the hot water supply pipe 1H includes a check valve 2H, a temperature sensor 3H, a flow rate adjustment valve 4H, and a flow rate sensor 5H in order from the upstream side to the downstream side.

The mixing pipe 1M is connected to the cold water supply pipe 1C and the hot water supply pipe 1H, and a mixed water path is formed inside the mixing pipe 1M. Mixed water obtained by mixing cold water supplied from the cold water supply path and hot water supplied from the hot water supply path flows through the mixed water path. The mixing pipe 1M includes a temperature sensor 3M and an on-off valve 6M in order from the upstream side to the downstream side. The downstream side of the mixing pipe 1M is connected to various discharge pipes (not illustrated).

The temperature sensors 3C, 3H, and 3M are thermistors. Temperature sensors 3C, 3H, and 3M detect a temperature of cold water present in the cold water supply pipe 1C, a temperature of hot water present in the hot water supply pipe 1H, and a temperature of mixed water present in the mixing pipe 1M, respectively. The temperature sensors 3C and 3H correspond to a part of the cold water-side information acquisition unit and the hot water-side information acquisition unit, respectively.

The flow rate adjustment valves 4C and 4H are valve elements that are driven by a stepping motor and adjust opening degrees by expanding or narrowing flow paths of the cold water supply path and the hot water supply path. The flow rate adjustment valves 4C and 4H adjust a flow rate $Q_C$ of cold water flowing through the cold water supply path and a flow rate $Q_H$ of hot water flowing through the hot water supply path, respectively. The flow rate adjustment valves 4C and 4H correspond to the cold water-side flow rate adjustment unit and the hot water-side flow rate adjustment unit, respectively.

The on-off valve 6M is an electromagnetic valve. The on-off valve 6M opens and closes a flow path of the mixed water path to flow or stop the mixed water in the mixed water path.

The flow rate sensors 5C and 5H are impeller type flowmeters. The flow rate sensors 5C and 5H detect the flow rate $Q_C$ of cold water and the flow rate $Q_H$ of hot water based on a rotation speed of an impeller rotated by the cold water flowing through the cold water supply path and the hot water flowing through the hot water supply path, respectively. The flow rate sensors 5C and 5H correspond to a part of the cold water-side information acquisition unit and the hot water-side information acquisition unit, respectively.

The hot and cold water mixer 10 includes a setting unit 70 and a control unit 80. The setting unit 70 is a remote controller installed in a kitchen or a bathroom. The setting unit 70 includes various operation buttons (not illustrated) and a display panel that displays the temperature and the flow rate of mixed water present in the mixed water path. When the user inputs desired setting values of the temperature and the flow rate of the mixed water with the operation buttons, the setting unit 70 sends setting information to the control unit 80.

The control unit 80 is connected to the temperature sensors 3C, 3H, and 3M, the flow rate sensors 5C and 5H, the flow rate adjustment valves 4C and 4H, the on-off valve 6M, and the setting unit 70 in a wired manner. The control unit 80 receives and stores temperature information detected by each of the temperature sensors 3C and 3H and flow rate information detected by each of the flow rate sensors 5C and 5H. The temperature information detected by the temperature sensor 3C and the flow rate information detected by the flow rate sensor 5C correspond to cold water information. The temperature information detected by the temperature sensor 3H and the flow rate information detected by the flow rate sensor 5H correspond to hot water information. In addition, the control unit 80 stores an opening degree state of each of the flow rate adjustment valves 4C and 4H and an on/off state of the on-off valve 6M. The control unit 80 also stores in advance how much the opening degrees of the flow rate adjustment valves 4C and 4H should be adjusted with respect to target flow rates of the cold water flowing through the cold water supply path and the hot water flowing through the hot water supply path.

When receiving setting information from the setting unit 70 regarding discharge start or discharge stop, the control unit 80 sends a control signal to the on-off valve 6M to open and close the on-off valve 6M. The control unit 80 calculates the target flow rates of cold water flowing through the cold water supply path and hot water flowing through the hot water supply path based on the setting information of the setting unit 70, the temperature information of the temperature sensors 3C and 3H, and the flow rate information of the flow rate sensors 5C and 5H, sends control signals to the flow rate adjustment valves 4C and 4H, and adjusts the opening degrees of the flow rate adjustment valves 4C and 4H.

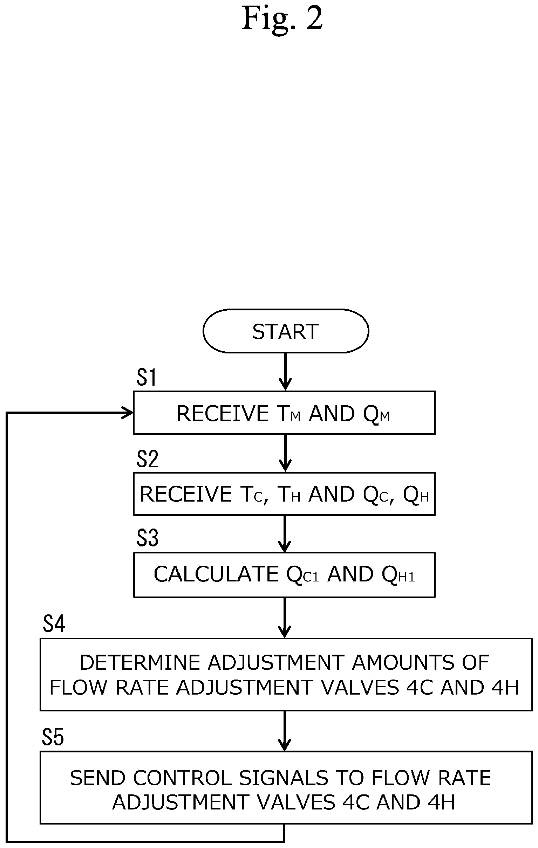

The control unit 80 controls the temperature and flow rate of mixed water present in the mixed water path as illustrated in Fig. 2. First, the control unit receives a set temperature $T_M$ and a set flow rate $Q_M$ of the mixed water set from the setting unit (step S1). The set temperature $T_M$ and the set flow rate $Q_M$ correspond to the setting information. Next, the control unit 80 receives a temperature $T_C$ of cold water currently present in the cold water supply path and a temperature $T_H$ of hot water currently resent in the hot water supply path detected by the temperature sensors 3C and 3H, respectively, and the flow rate $Q_C$ of cold water currently present in the cold water supply path and the flow rate $Q_H$ of hot water currently present in the hot water supply path detected by the flow rate sensors 5C and 5H, respectively (step S2). Next, the control unit 80 calculates a target flow rate $Q_{C1}$ of the cold water flowing through the cold water supply path and a target flow rate $Q_{H1}$ of the hot water flowing through the hot water supply path based on the setting information $T_M$ and $Q_M$, the current temperature information $T_C$ and $T_H$, and the current flow rate information $Q_C$ and $Q_H$ (step S3). The flow rate $Q_C$ of the cold water flowing through the cold water supply path is the same as the flow rate of cold water flowing through the flow rate adjustment valve 4C of the cold water supply path. The flow rate $Q_H$ of the hot water flowing through the hot water supply path is the same as the flow rate of hot water flowing through the flow rate adjustment valve 4H of the hot water supply path. Details of this calculation method will be described later.

Next, based on the calculated target flow rates $Q_{C1}$ and $Q_{H1}$, the control unit 80 determines adjustment amounts from the opening degrees of the flow rate adjustment valves 4C and 4H stored in advance (step S4). In step S4, the control unit 80 determines the adjustment amounts of the flow rate adjustment valves 4C and 4H while suppressing change amounts of the current opening degrees to the opening degrees at which the same flow rates as the target flow rates $Q_{C1}$ and $Q_{H1}$ can be attained to about 80% so that the flow rates do not become the same as the calculated target flow rates $Q_{C1}$ and $Q_{H1}$. Finally, the control unit 80 sends control signals to the flow rate adjustment valves 4C and 4H based on the determined adjustment amounts of the flow rate adjustment valves 4C and 4H (step S5), and returns to step S1 of receiving the setting information and repeats the processing. In step S5, when it is determined that predetermined conditions are satisfied, the control unit 80 calculates again the target flow rates $Q_{C1}$ and $Q_{H1}$ based on the setting information $T_M$ and $Q_M$, the current temperature information $T_C$ and $T_H$, and the current flow rate information $Q_C$ and $Q_H$. Details of this calculation method will be described later. The number of repetitions of steps S1 to S5 may be set to a predetermined number or may be changed according to the setting information. When the number of repetitions from step S1 to step S5 is the last, the control unit 80 determines the adjustment amounts of the flow rate adjustment valves 4C and 4H in step S4 so that the flow rates become the same as the calculated target flow rates.

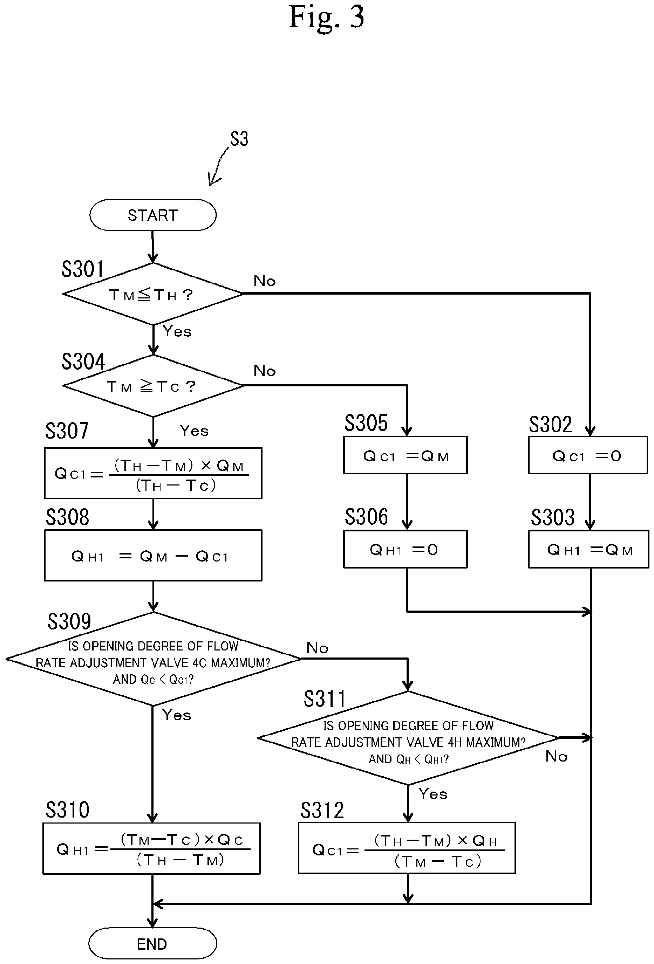

The control unit 80 calculates the target flow rate $Q_{C1}$ for the flow rate adjustment valve 4C of the cold water supply path and the target flow rate $Q_{H1}$ for the flow rate adjustment valve 4H of the hot water supply path as illustrated in Fig. 3. First, the control unit 80 determines whether the set temperature $T_M$ is lower than the temperature $T_H$ of hot water present in the hot water supply path (step S301). When it is determined in step S301 that the set temperature $T_M$ is higher than the temperature $T_H$ of the hot water present in the hot water supply path (when No is determined), the control unit 80 calculates the target flow rate $Q_{C1}$ for the flow rate adjustment valve 4C to be 0 (step S302), calculates the target flow rate $Q_{H1}$ for the flow rate adjustment valve 4H to be the same as the set flow rate $Q_M$ (step S303), and proceeds to step S4 of determining the adjustment amounts of the flow rate adjustment valves 4C and 4H. When it is determined in step S301 that the set temperature $T_M$ is equal to the temperature $T_H$ of the hot water present in the hot water supply path or the set temperature $T_M$ is lower than the temperature $T_H$ of the hot water present in the hot water supply path (when Yes is determined), the control unit 80 determines whether the set temperature $T_M$ is higher than the temperature $T_C$ of cold water present in the cold water supply path (step S304). When it is determined in step S304 that the set temperature $T_M$ is lower than the temperature $T_C$ of the cold water present in the cold water supply path (when No is determined), the control unit 80 calculates the target flow rate $Q_{C1}$ for the flow rate adjustment valve 4C to be the same as the set flow rate $Q_M$ (step S305), calculates the target flow rate $Q_{H1}$ for the flow rate adjustment valve 4H to be 0 (step S306), and proceeds to step S4 of determining the adjustment amounts of the flow rate adjustment valves 4C and 4H.

When it is determined in step S304 that the set temperature $T_M$ is equal to the cold water temperature $T_C$ or the set temperature $T_M$ is higher than the cold water temperature $T_C$ (when Yes is determined), the control unit 80 calculates the target flow rate $Q_{C1}$ for the flow rate adjustment valve 4C according to the following Formula 1 (step S307) and calculates the target flow rate $Q_{H1}$ for the flow rate adjustment valve 4H according to the following Formula 2 (step S308).

$$Q_{C1} = (T_H - T_M) \times Q_M / (T_H - T_C) \ldots \text{Formula 1}$$

$$Q_{H1} = Q_M - Q_{C1} \ldots \text{Formula 2}$$

Next, the control unit 80 determines whether the opening degree of the flow rate adjustment valve 4C is maximum and also determines whether the flow rate $Q_C$ of the cold water currently present in the cold water supply path is lower than the target flow rate $Q_{C1}$ for the flow rate adjustment valve 4C (step S309). The case where the opening degree of the flow rate adjustment valve 4C is maximum is synonymous with the case where the flow rate $Q_C$ of the cold water flowing through the cold water supply path cannot be increased. When it is determined in step S309 that the opening degree of the flow rate adjustment valve 4C is maximum and also that the cold water flow rate $Q_C$ is lower than the target flow rate $Q_{C1}$ (when Yes is determined), the control unit 80 calculates again and updates the target flow rate $Q_{H1}$ for the flow rate adjustment valve 4H according to the following Formula 3 based on the flow rate $Q_C$ of the cold water currently present in the cold water supply path (step S310).

$$Q_{H1} = (T_M - T_C) \times Q_C / (T_H - T_M) \ldots \text{Formula 3}$$

Then, the control unit 80 proceeds to step S4 of determining the adjustment amounts of the flow rate adjustment valves 4C and 4H based on the target flow rate $Q_{C1}$ for the flow rate adjustment valve 4C calculated in step S307 and the target flow rate $Q_{H1}$ for the flow rate adjustment valve 4H calculated again and updated in step S310.

When it is determined in step S309 that the opening degree of the flow rate adjustment valve 4C is not maximum, or that the target flow rate $Q_{C1}$ is equal to the cold water flow rate $Q_C$ or lower than the cold water flow rate $Q_C$ (when No is determined), the control unit 80 determines whether the opening degree of the flow rate adjustment valve 4H is maximum and also determines whether the flow rate $Q_H$ of the hot water currently present in the hot water supply path is lower than the target flow rate $Q_{H1}$ for the flow rate adjustment valve 4H (step S311). The case where the opening degree of the flow rate adjustment valve 4H is maximum is synonymous with the case where the flow rate $Q_H$ of the hot water flowing through the hot water supply path cannot be increased. When it is determined in step S311 that the opening degree of the flow rate adjustment valve 4H is maximum and also that the hot water flow rate $Q_H$ is lower than the target flow rate $Q_{H1}$ (when Yes is determined), the control unit 80 calculates again and updates the target flow rate $Q_{C1}$ for the flow rate adjustment valve 4C according to the following Formula 4 based on the flow rate $Q_H$ of the hot water currently present in the hot water supply path (step S312).

$$Q_{C1} = (T_H - T_M) \times Q_H / (T_M - T_C) \ldots \text{Formula 4}$$

Then, the control unit 80 proceeds to step S4 of determining the adjustment amounts of the flow rate adjustment valves 4C and 4H based on the target flow rate $Q_{H1}$ for the hot water supply path calculated in step S308 and the target flow rate $Q_{C1}$ for the cold water supply path calculated again and updated in step S312. When it is determined in step S311 that the opening degree of the flow rate adjustment valve 4H is not maximum, or that the target flow rate $Q_{H1}$ is equal to the hot water flow rate $Q_H$ or lower than the hot water flow rate $Q_H$ (when No is determined), the flow rate adjustment valves 4C and 4H can increase the opening degrees. In this case, the control unit 80 does not update the target flow rate $Q_{C1}$ or $Q_{H1}$, and proceeds to step S4 of determining the adjustment amounts of the flow rate adjustment valves 4C and 4H.

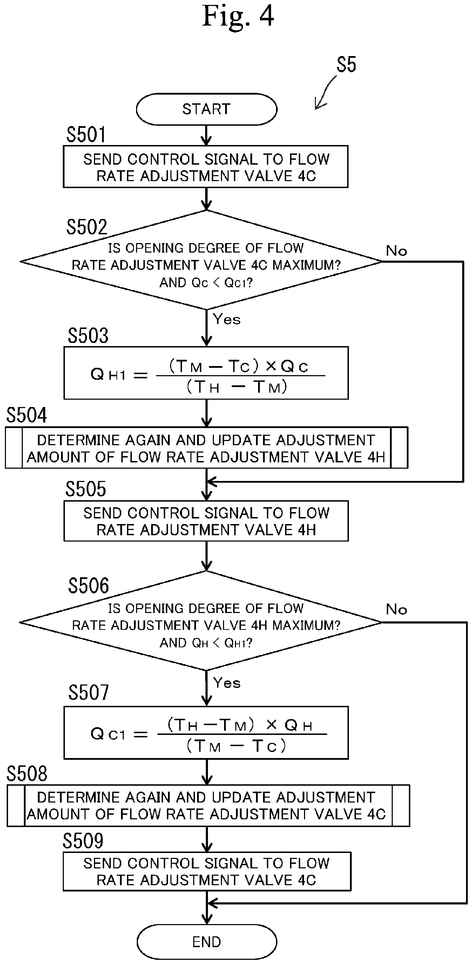

In step S5, the control unit 80 calculates again the target flow rate $Q_{C1}$ for the flow rate adjustment valve 4C or the target flow rate $Q_{H1}$ for the flow rate adjustment valve 4H as illustrated in Fig. 4. First, the control unit 80 sends a control signal to the flow rate adjustment valve 4C, and drives the flow rate adjustment valve 4C by the adjustment amount of the flow rate adjustment valve 4C determined in step S4 (step S501). Next, the control unit 80 determines whether the opening degree of the flow rate adjustment valve 4C is maximum and also determines whether the flow rate $Q_C$ of the cold water currently present in the cold water supply path is lower than the target flow rate $Q_{C1}$ for the flow rate adjustment valve 4C (step S502). When it is determined in step S502 that the opening degree of the flow rate adjustment valve 4C is maximum and also that the cold water flow rate $Q_C$ is lower than the target flow rate $Q_{C1}$ for the flow rate adjustment valve 4C (when Yes is determined), the control unit 80 calculates again and updates the target flow rate $Q_{H1}$ for the hot water supply path according to the following Formula 5 based on the flow rate $Q_C$ of the cold water currently present in the cold water supply path (step S503).

$$Q_{H1} = (T_M - T_C) \times Q_C / (T_H - T_M) ... \text{Formula 5}$$

Next, the control unit 80 determines again and updates the adjustment amount of the flow rate adjustment valve 4H determined in step S4 based on the target flow rate $Q_{H1}$ calculated again in step S503 (step S504). Then, the control unit 80 sends a control signal to the flow rate adjustment valve 4H, and drives the flow rate adjustment valve 4H by the adjustment amount of the flow rate adjustment valve 4H determined in step S504 (step S505). When it is determined in step S502 that the opening degree of the flow rate adjustment valve 4C is not maximum, or that the target flow rate $Q_{C1}$ is equal to the cold water flow rate $Q_C$ or lower than the cold water flow rate $Q_C$ (when No is determined), the flow rate adjustment valve 4C can increase the opening degree. In this case, the control unit 80 proceeds to step S505 without executing step S503 and S504. In this case, the adjustment amount of the flow rate adjustment valve 4H remains the adjustment amount determined in step S4.

Next, the control unit 80 determines whether the opening degree of the flow rate adjustment valve 4H is maximum and also determines whether the flow rate $Q_H$ of the hot water currently present in the hot water supply path is lower than the target flow rate $Q_{H1}$ for the flow rate adjustment valve 4H (step S506). When it is determined in step S506 that the opening degree of the flow rate adjustment valve 4H is maximum and also that the hot water flow rate $Q_H$ is lower than the target flow rate $Q_{H1}$ (when Yes is determined), the control unit 80 calculates again and updates the target flow rate $Q_{C1}$ for the flow rate adjustment valve 4C according to the following Formula 6 based on the flow rate $Q_H$ of the hot water currently present in the hot water supply path (step S507).

$$Q_{C1} = (T_H - T_M) \times Q_H / (T_M - T_C) ... \text{Formula 6}$$

Next, the control unit 80 determines again and updates the adjustment amount of the flow rate adjustment valve 4C in the cold water supply path determined in step S4 based on the target flow rate $Q_{C1}$ for the flow rate adjustment valve 4C calculated again in step S507 (step S508). Then, the control unit 80 sends a control signal to the flow rate adjustment valve 4C, and drives the flow rate adjustment valve 4C by the adjustment amount of the flow rate adjustment valve 4C determined in step S508 (step S509). When it is determined in step S506 that the opening degree of the flow rate adjustment valve 4H is not maximum, or that the target flow rate $Q_{H1}$ is equal to the hot water flow rate $Q_H$ or lower than the hot water flow rate $Q_H$ (when No is determined), the flow rate adjustment valve 4H can increase the opening degree. In this case, the control unit 80 proceeds to step S509 without executing step S507 and S508. In this case, the adjustment amount of the flow rate adjustment valve 4C in the cold water supply path remains the adjustment amount determined in step S4.

Next, the action and effect of the present embodiment will be described. The hot and cold water mixer 10 according to the present embodiment includes a cold water supply pipe 1C connected to a cold water supply source C and having a cold water supply path formed therein through which cold water supplied from the cold water supply source C flows; a hot water supply pipe 1H connected to a hot water supply source H and having a hot water supply path formed therein through which hot water supplied from the hot water supply source H flows; and a mixing pipe 1M connected to the cold water supply pipe 1C and the hot water supply pipe 1H and having a mixed water path formed therein through which mixed water obtained by mixing cold water supplied from the cold water supply path and hot water supplied from the hot water supply path flows. The hot and cold water mixer 10 further includes a flow rate adjustment valve 4C which adjusts a flow rate of cold water preset in the cold water supply path, and a temperature sensor 3C and a flow rate sensor 5C which detect a temperature and a flow rate, respectively, of the cold water present in the cold water supply path. The hot and cold water mixer 10 further includes a flow rate adjustment valve 4H which adjusts a flow rate of hot water preset in the hot water supply path, and a temperature sensor 3H and a flow rate sensor 5C which detect a temperature and a flow rate, respectively, of the hot water present in the hot water supply path. The hot and cold water mixer 10 further includes a setting unit 70 which sets a temperature and a flow rate of mixed water present in the mixed water path, and a control unit 80 which controls the flow rate adjustment valves 4C and 4H. Further, the control unit 80 of the hot and cold water mixer 10 calculates a target flow rate $Q_{C1}$ for the flow rate adjustment valve 4C and a target flow rate $Q_{H1}$ for the flow rate adjustment valve 4H based on a set temperature $T_M$ and a set flow rate $Q_M$ of the setting unit 70, a temperature $T_C$ of the cold water present in the cold water supply path acquired from the temperature sensor 3C, and a temperature $T_H$ of the hot water present in the hot water supply path acquired from the temperature sensor 3H, and determines and controls adjustment amounts of the flow rate adjustment valves 4C and 4H based on the target flow rates $Q_{C1}$ and $Q_{H1}$, respectively. As a result, the hot and cold water mixer 10 can supply mixed water having a temperature and a flow rate desired by the user.

When the control unit 80 of the hot and cold water mixer 10 determines that the flow rate adjustment valve 4C cannot increase the flow rate and also determines, by comparing the target flow rate $Q_{C1}$ for flow rate adjustment valve 4C with the flow rate $Q_C$ of the cold water flowing through the cold water supply path, that the target flow rate $Q_{C1}$ is higher, the control unit 80 calculates and updates the target flow rate $Q_{H1}$ of the flow rate adjustment valve 4H based on the flow rate $Q_C$ of the cold water currently flowing through the cold water supply path so that the temperature $T_M$ of the mixed water set by the setting unit 70 can be attained, and controls the flow rate adjustment valve 4H based on the updated target flow rate $Q_{H1}$. Further, when the control unit 80 determines that the flow rate adjustment valve 4H cannot increase the flow rate and also determines, by comparing the target flow rate $Q_{H1}$ of flow rate adjustment valve 4H with the flow rate $Q_H$ of the hot water flowing through the hot water supply path, that the target flow rate $Q_{H1}$ is higher, the control unit 80 calculates and updates the target flow rate $Q_{C1}$ for the flow rate adjustment valve 4C based on the flow rate $Q_H$ of the hot water currently flowing through the hot water supply path so that the temperature $T_M$ of the mixed water set by the setting unit 70 can be attained, and controls the flow rate adjustment valve 4C based on the updated target flow rate $Q_{C1}$. When there is a pressure fluctuation such as a pressure of the cold water supply source C and a pressure of the hot water supply source H being lower than predetermined pressures or the differential pressures being large, the flow rates cannot be increased to the target flow rates even if opening degrees of the flow rate adjustment valves 4C and 4H are maximized. The hot and cold water mixer 10, however, prioritizes the set temperature $T_M$ over the set flow rate $Q_M$ of the mixed water, and updates the target flow rates to control the flow rate adjustment valves 4C and 4H. Thus, the hot and cold water mixer 10 can perform stable temperature control.

Further, the control unit 80 of the hot and cold water mixer 10 stores the opening degrees of the flow rate adjustment valves 4C and 4H, and determines whether the opening degrees are maximum to determine that the flow rates cannot be increased. As a result, the hot and cold water mixer 10 can rapidly determine that the flow rates cannot be increased, without driving the flow rate adjustment valves 4C and 4H and detecting that there is no change in flow rate information on the flow rate sensors 5C and 5H. Thus, the hot and cold water mixer 10 can perform more stable temperature control.

The present disclosure is not limited to the embodiment explained with reference to the above description and drawings, and the following embodiments are also included in the technical scope of the present invention.

(1) The hot and cold water mixer 10 of the present embodiment includes the on-off valve 6M in the mixing pipe 1M, but the mixing pipe 1M may have no on-off valve. In this case, the cold water supply pipe 1C and the hot water supply pipe 1H may have an on-off valve, or the flow rate adjustment valves 4C and 4H may have a function of closing each flow path as an on-off valve.

(2) The cold water supply pipe 1C and the hot water supply pipe 1H of the present embodiment have the flow rate sensors 5C and 5H, respectively. However, either one of the flow rate sensors 5C and 5H may be omitted, and the mixing pipe 1M may have a flow rate sensor. For example, when the flow rate sensor 5H is not provided in the hot water supply pipe 1H, the flow rate $Q_H$ of the hot water in the hot water supply path is calculated by subtracting the cold water flow rate $Q_C$ detected by the flow rate sensor 5C of the cold water supply pipe 1C from the mixed water flow rate detected by the flow rate sensor in the mixing pipe 1M.

(3) The control unit 80 of the present embodiment is connected to the flow rate sensors 5C and 5H, the setting unit 70, and the like in a wired manner, but may be electrically connected to a part or all of them in a wireless manner.

(4) The control unit 80 of the present embodiment stores the opening degrees of the flow rate adjustment valves 4C and 4H, but may not store the opening degrees. In this case, the control unit 80 may drive the flow rate adjustment valves 4C and 4H and detect the changes in flow rate information of the flow rate sensors 5C and 5H to determine whether the flow rate adjustment valves 4C and 4H cannot increase the flow rates.

REFERENCE SIGNS LIST

10 Hot and cold water mixer
1C Cold water supply pipe (cold water supply path)

1H Hot water supply pipe (hot water supply path)
1M Mixing pipe (mixed water path)
3C Temperature sensor (part of cold water-side information acquisition unit)
3H Temperature sensor (part of hot water-side information acquisition unit)
4C Flow rate adjustment valve (cold water-side flow rate adjustment unit)
4H Flow rate adjustment valve (hot water-side flow rate adjustment unit)
5C Flow rate sensor (part of cold water-side information acquisition unit)
5H Flow rate sensor (part of hot water-side information acquisition unit)
70 Setting unit
80 Control unit
$Q_M$ Set flow rate (part of setting information)
$T_M$ Set temperature (part of setting information)
$Q_C$ Flow rate of cold water in cold water supply path (part of cold water information)
$T_C$ Temperature of cold water in cold water supply path (part of cold water information)
$Q_H$ Flow rate of hot water in hot water supply path (part of hot water information)
$T_H$ Temperature of hot water in hot water supply path (part of hot water information)
$Q_{C1}$ Target flow rate of cold water flowing through cold water supply path
$Q_{H1}$ Target flow rate of hot water flowing through hot water supply path

**Claims**

1. A hot and cold water mixer comprising:

   a cold water supply path connected to a cold water supply source and through which cold water supplied from the cold water supply source flows;
   a hot water supply path connected to a hot water supply source and through which hot water supplied from the hot water supply source flows;
   a mixed water path that is connected to the cold water supply path and the hot water supply path and through which mixed water obtained by mixing cold water supplied from the cold water supply path and hot water supplied from the hot water supply path flows;
   a cold water-side flow rate adjustment unit that adjusts a flow rate of cold water present in the cold water supply path;
   a hot water-side flow rate adjustment unit that adjusts a flow rate of hot water present in the hot water supply path;
   a cold water-side information acquisition unit configured to acquire cold water information including a temperature and the flow rate of the cold water present in the cold water supply path;
   a hot water-side information acquisition unit configured to acquire hot water information including a temperature and the flow rate of the hot water present in the hot water supply path;
   a setting unit configured to set a temperature and a flow rate of mixed water present in the mixed water path; and
   a control unit that calculates a target flow rate of cold water flowing through the cold water supply path and a target flow rate of hot water flowing through the hot water supply path based on setting information of the setting unit, the cold water information of the cold water-side information acquisition unit, and the hot water information of the hot water-side information acquisition unit, and controls the cold water-side flow rate adjustment unit and the hot water-side flow rate adjustment unit,
   wherein, when the control unit determines that at least either one of the cold water-side flow rate adjustment unit and the hot-water side flow rate adjustment unit cannot increase the flow rate, and also determines, by comparing the target flow rate for the one flow rate adjustment unit with the flow rate of water flowing through the one flow rate adjustment unit, that the target flow rate for the one flow rate adjustment unit is higher, the control unit calculates and updates the target flow rate for the other flow rate adjustment unit so that the temperature of the mixed water set by the setting unit can be attained, and controls the other flow rate adjustment unit based on the updated target flow rate for the other flow rate adjustment unit.

2. The hot and cold water mixer according to claim 1, wherein the control unit stores each of opening degrees of the cold water-side flow rate adjustment unit and the hot water-side flow rate adjustment unit, and determines that the flow rates cannot be increased.

# Fig. 1

# Fig. 2

START

S1
RECEIVE $T_M$ AND $Q_M$

S2
RECEIVE $T_C$, $T_H$ AND $Q_C$, $Q_H$

S3
CALCULATE $Q_{C1}$ AND $Q_{H1}$

S4
DETERMINE ADJUSTMENT AMOUNTS OF FLOW RATE ADJUSTMENT VALVES 4C AND 4H

S5
SEND CONTROL SIGNALS TO FLOW RATE ADJUSTMENT VALVES 4C AND 4H

# Fig. 3

S3

START

S301  $T_M \leqq T_H$ ? — No

Yes

S304  $T_M \geqq T_C$ ? — No

Yes

S307
$$Q_{C1} = \frac{(T_H - T_M) \times Q_M}{(T_H - T_C)}$$

S308
$$Q_{H1} = Q_M - Q_{C1}$$

S305
$$Q_{C1} = Q_M$$

S306
$$Q_{H1} = 0$$

S302
$$Q_{C1} = 0$$

S303
$$Q_{H1} = Q_M$$

S309
IS OPENING DEGREE OF FLOW RATE ADJUSTMENT VALVE 4C MAXIMUM? AND $Q_C < Q_{C1}$? — No

Yes

S311
IS OPENING DEGREE OF FLOW RATE ADJUSTMENT VALVE 4H MAXIMUM? AND $Q_H < Q_{H1}$? — No

Yes

S310
$$Q_{H1} = \frac{(T_M - T_C) \times Q_C}{(T_H - T_M)}$$

S312
$$Q_{C1} = \frac{(T_H - T_M) \times Q_H}{(T_M - T_C)}$$

END

# Fig. 4

S5

```
        ( START )
```

S501

SEND CONTROL SIGNAL TO FLOW
RATE ADJUSTMENT VALVE 4C

S502

IS OPENING DEGREE OF FLOW
RATE ADJUSTMENT VALVE 4C MAXIMUM?
AND $Q_c < Q_{ci}$?

No →

Yes ↓

S503

$$Q_{H1} = \frac{(T_M - T_C) \times Q_C}{(T_H - T_M)}$$

S504

DETERMINE AGAIN AND UPDATE ADJUSTMENT
AMOUNT OF FLOW RATE ADJUSTMENT VALVE 4H

S505

SEND CONTROL SIGNAL TO FLOW
RATE ADJUSTMENT VALVE 4H

S506

IS OPENING DEGREE OF FLOW
RATE ADJUSTMENT VALVE 4H MAXIMUM?
AND $Q_H < Q_{H1}$?

No →

Yes ↓

S507

$$Q_{C1} = \frac{(T_H - T_M) \times Q_H}{(T_M - T_C)}$$

S508

DETERMINE AGAIN AND UPDATE ADJUSTMENT
AMOUNT OF FLOW RATE ADJUSTMENT VALVE 4C

S509

SEND CONTROL SIGNAL TO FLOW
RATE ADJUSTMENT VALVE 4C

```
        ( END )
```

## INTERNATIONAL SEARCH REPORT

International application No.

PCT/JP2020/022154

| A. CLASSIFICATION OF SUBJECT MATTER |
|---|
| Int. Cl. E03C1/044(2006.01)i, F24D17/00(2006.01)i<br>FI: F24D17/00 L, E03C1/044 |
| According to International Patent Classification (IPC) or to both national classification and IPC |

| B. FIELDS SEARCHED |
|---|
| Minimum documentation searched (classification system followed by classification symbols)<br>Int. Cl. E03C1/044, F24D17/00 |
| Documentation searched other than minimum documentation to the extent that such documents are included in the fields searched<br>Published examined utility model applications of Japan   1922-1996<br>Published unexamined utility model applications of Japan   1971-2020<br>Registered utility model specifications of Japan   1996-2020<br>Published registered utility model applications of Japan   1994-2020 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 2003-311135 A (ALUVO KK) 05 November 2003,<br>paragraphs [0017]-[0036], fig. 1, 2 | 1<br>2 |
| Y | JP 2018-165595 A (NORITZ CORP.) 25 October 2018,<br>paragraph [0031], fig. 1 | 2 |
| A | JP 4-62337 A (NORITZ CORP.) 27 February 1992, page<br>2, lower left column, fig. 1, 2 | 1-2 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06.08.2020 | Date of mailing of the international search report<br>25.08.2020 |
|---|---|
| Name and mailing address of the ISA/<br>   Japan Patent Office<br>   3-4-3, Kasumigaseki, Chiyoda-ku,<br>   Tokyo 100-8915, Japan | Authorized officer<br><br>Telephone No. |

Form PCT/ISA/210 (second sheet) (January 2015)

INTERNATIONAL SEARCH REPORT
Information on patent family members

| Patent Documents referred to in the Report | Publication Date | Patent Family | Publication Date |
|---|---|---|---|
| International application No. | | PCT/JP2020/022154 | |
| JP 2003-311135 A | 05.11.2003 | WO 2003/087675 A1 | |
| JP 2018-165595 A | 25.10.2018 | (Family: none) | |
| JP 4-62337 A | 27.02.1992 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015183986 A